# EUROPÄISCHE PATENTANMELDUNG

(11) **EP 1 577 022 A2**
(43) Veröffentlichungstag der Anmeldung: **21.09.2005**
(21) Anmeldenummer: 05005448.5
(22) Anmeldetag: 13.03.2005
(51) Int. Cl.: B07B 1/22

(54) **Trommelsiebmaschine**

(30) Priorität: 15.03.2004 DE 102004012768
(71) Anmelder: Farwick, Andreas, 59302 Oelde (DE)
(72) Erfinder: Farwick, Andreas, 59302 Oelde (DE)
(74) Vertreter: Schütte, Hartmut

(57) **Zusammenfassung**

Siebmaschine mit einer Gestelleinrichtung zum drehbaren Tragen einer Trommel, und einer an der Gestelleinrichtung angeordneten Antriebseinrichtung, welche mit einem Antriebsmittel zusammenwirkt. Die Antriebseinrichtung ist zwischen wenigstens einer Ruhestellung und wenigstens einer Eingriffsstellung bewegbar.

## Beschreibung

Die Erfindung betrifft eine Siebmaschine mit einer Gestelleinrichtung zum drehbaren Tragen einer Trommel. An der Gestelleinrichtung ist eine Antriebseinrichtung angeordnet, welche mit einem Antriebsmittel zusammenwirkt.

Es sind Siebmaschinen im Stand der Technik bekannt geworden, bei denen auf der Trommel eine Kette befestigt ist und bei denen ein Motor mit einem Kettenrad in die Kette eingreift, um Antriebsleistung zu übertragen. Bei dieser bekannten Maschine greifen prinzipbedingt immer nur wenige Zähne in die Kette ein.

Bei dieser Maschine ist ein Rechts- und Linkslauf der Trommel möglich, aber es kann öfter zum Durchrutschen kommen, da nur wenige Zähne an der Kraftübertragung beteiligt sind.

Weiterhin ist eine Siebmaschine bekannt geworden, bei der hinter dem Motor ein Kettenspanner mit einer mechanischen Feder sitzt. Die Kette umschlingt das Kettenrad des Motors über einen relativ großen Winkelbereich, so daß in einer Drehrichtung eine hohe Leistungsübertragung möglich ist. Für Wartungszwecke kann es vorteilhaft sein, zurückdrehen zu können. Bei dieser bekannten Bauart reicht die Kraft der mechanischen Feder nicht aus, um auch im gegenläufigen Betrieb eine genügende Vorspannung aufzubringen. Ein weiterer Nachteil ist, daß zum Austausch der Trommel die Feder entspannt werden muß, was aufgrund der hohen Federkraft ein gewisses Risiko bedingt. Deshalb sollte die Entlastung mit Vorsicht erfolgen, wodurch Zeitverluste entstehen können.

Es ist deshalb die Aufgabe der vorliegenden Erfindung eine Vorrichtung bereit zu stellen, welche einen verbesserten Antrieb aufweist.

Diese Aufgabe wird erfindungsgemäß durch eine Vorrichtung mit den Merkmale des Anspruchs 1 und durch ein Verfahren mit den Merkmalen des Anspruchs 12 gelöst.

Bevorzugte Weiterbildungen der Erfindung sind Gegenstand der Unteransprüche.

Die vorliegende Erfindung gemäß Anspruch 1 definiert eine Siebmaschine mit einer Gestelleinrichtung zum drehbaren Tragen einer Trommel. Eine an der Gestelleinrichtung angeordnete Antriebseinrichtung wirkt mit einem Antriebsmittel zusammen. Die Antriebseinrichtung ist zwischen wenigstens einer Ruhestellung und wenigstens einer Eingriffsstellung bewegbar.

Die erfindungsgemäße Siebmaschine hat viele Vorteile.

Ein erheblicher Vorteil ist, daß das Antriebsmittel immer mit der gleichen Kraft belastet wird, da die Antriebseinrichtung in eine Eingriffsstellung gebracht wird. Das sorgt für eine zuverlässige Kraftübertragung zwischen Antriebsmotor und Antriebsmittel. Eine zuverlässige Kraftübertragung ist nötig, da der Motor hohe Leistung aufnehmen kann, die im Ausführungsbeispiel bis zu 30 kW und mehr beträgt.

Wenn als Antriebsmittel eine Kette, eine Rollenkette, ein Riemen, Zahnriemen, Keilriemen oder dergleichen eingesetzt wird, dann kann ein Durchrutschen zuverlässig verhindert werden oder es können derartige Fälle wenigstens weitgehend reduziert werden.

In einer bevorzugten Weiterbildung ist die Antriebseinrichtung an der Gestelleinrichtung angeordnet und zwischen wenigstens einer Ruhestellung und wenigstens einer Eingriffsstellung bewegbar.

Vorzugsweise kann die Antriebseinrichtung wenigstens eine Motoreinrichtung und eine Ketteneinrichtung umfassen. Die Antriebseinrichtung ist dann vorzugsweise geeignet, beim Siebbetrieb die Trommel wahlweise in die eine oder die andere Richtung drehen zu lassen, indem eine Spanneinrichtung zum Spannen der Ketteneinrichtung vorgesehen ist.

Gemäß einer bevorzugten Weiterbildung ist eine Stelleinrichtung zum Bewegen der Antriebseinrichtung aus der Ruhestellung in die Eingriffsstellung vorgesehen. Vorzugsweise ist ein automatisches Bewegen möglich.

In einer Weiterbildung der Erfindung ist das Antriebsmittel mit der Stelleinrichtung vorbelastbar. Die Stelleinrichtung wirkt als Spanneinrichtung. Die Spannkraft der Stelleinrichtung belastet das Antriebsmittel und stellt eine genügende Vorspannung im Antriebsmittel sicher. Vorzugsweise ist die Spannkraft einstellbar.

In der Ruhestellung ist das Antriebsmittel vorzugsweise im wesentlichen unbelastet oder ganz außer Eingriff. In der Eingriffsstellung ist das Antriebsmittel vorzugsweise mit einer vorbestimmten Spannkraft vorbelastet.

Bevorzugterweise umfaßt die Stelleinrichtung wenigstens einen Hydraulikzylinder.

Vorzugsweise ist die Antriebseinrichtung verschwenkbar und besonders bevorzugt an einem verschwenkbar gelagerten Flansch oder dergleichen angeordnet.

In einer bevorzugten Weiterbildung ist eine Steuereinrichtung vorgesehen. Vorzugsweise ist eine Bedieneinheit zur automatischen und/oder manuellen Bedienung vorgesehen.

Die Siebmaschine kann einen Aufgabebunker mit einem Bunkerförderband umfassen. Die Fördergeschwindigkeit des Bunkerförderbandes kann mit der Steuereinrichtung steuerbar sein.

Vorzugsweise ist die Stelleinrichtung mit der Steuereinrichtung steuerbar.

Wenigstens eine Austragseinrichtung in Form z.B. eines Austragsförderbandes, wenigstens ein Trommelförderband und wenigstens eine Querfördereinrichtung sind in einer Weiterbildung vorgesehen.

In dem Hydraulikkreislauf der Stelleinrichtung ist vorzugsweise wenigstens eine hydraulische Federeinrichtung angeordnet.

Vorzugsweise steuert die Steuereinrichtung während des Betriebs die Stelleinrichtung kontinuierlich oder in periodischen Abständen, z.B. einmal pro Sekunde, pro Minute, pro Stunde oder pro Tag, oder nach einer bestimmten Fördermenge.

In einer bevorzugten Weiterbildung steht die Antriebseinrichtung in Verbindung mit dem Antrieb der Stelleinrichtung. Die Verbindung kann eine Wirkverbindung sein. Beispielsweise kann ein Maß für die Belastung des Trommelantriebs gemessen werden und dementsprechend der Antrieb der Stelleinrichtung gesteuert werden, so daß bei steigender Belastung des Trommelantriebs die Vorspannung durch die Stelleinrichtung erhöht wird.

Falls beide Antriebe hydraulisch ausgeführt sind, dann steht der Hydraulikkreislauf der Antriebseinrichtung vorzugsweise in Verbindung mit dem Hydraulikkreislauf der Stelleinrichtung. Es kann auch der Druck im Hydraulikkreislauf des Trommelantriebs gemessen werden und der Druck im Hydraulikkreislauf der Stelleinrichtung entsprechend angepaßt werden, z.B. linear proportional oder gemäß einer quadratischen, exponentiellen oder sonstigen Funktion oder gemäß einer Kennlinie. Die Regelung der Drücke in beiden Kreisläufen wird dann insbesondere durch eine Steuereinheit vorgenommen werden, die in der zentralen Steuereinrichtung integriert oder auch separat vorhanden sein kann.

Es ist auch möglich, daß eine hydraulische Verbindung beider Antriebe besteht, falls beide Antriebe hydraulisch ausgeführt sind.

Falls ein hydraulischer Antrieb für die Stelleinrichtung und/oder den Trommelantrieb verwendet wird, ist es bevorzugt, daß wenigstens ein Druckbegrenzungsventil in einem Kreislauf vorgesehen ist.

In Weiterbildungen aller zuvor beschriebenen Ausgestaltungen ist es bevorzugt, wenigstens einen Drucksensor vorzusehen. Insbesondere, wenn wenigstens ein hydraulischer Antrieb verwendet wird, ist es bevorzugt, wenigstens einen Drucksensor in wenigstens einem Hydraulikkreislauf anzuordnen, um den dort vorhandenen Druck zu bestimmen. Ein oder mehrere solcher Drucksignale können zur Steuerung und/oder Regelung der Druckverläufe in z.B. dem hydraulischen Kreislauf eines Trommelantriebs oder im hydraulischen Kreislauf der Stelleinrichtung verwendet werden.

Das erfindungsgemäße Verfahren nach Anspruch 12 betrifft ein Verfahren zur Steuerung einer Siebmaschine, bei welchem nach einem Startsignal wenigstens die folgenden Schritte automatisch zeitversetzt durchgeführt werden:
a) zunächst Spannen des Kettentriebes der Trommel mittels der Stelleinrichtung;
b) Starten des Antriebs der Trommel.

Durch das erfindungsgemäße Verfahren wird sichergestellt, daß eine genügende Spannung im Kettentrieb vorliegt, um das erforderliche Antriebsmoment zu übertragen.

Vorzugsweise wird vor dem Starten des Antriebs der Trommel wenigstens einer der folgenden Schritte automatisch zeitversetzt durchgeführt wird:
- Starten des Antriebs wenigstens einer Austragsfördereinrichtung,
- Starten des Antriebs einer Trommelfördereinrichtung

Vorteilhafterweise wird nach dem Starten der Trommel wenigstens der folgende Schritt automatisch zeitversetzt durchgeführt:
- Starten des Antriebs der Bunkerfördereinrichtung.

In einer bevorzugten Weiterbildung wird nach einem Abschaltsignal vor dem Abschalten des Antriebs der Trommel wenigstens
- der Antrieb der Bunkerfördereinrichtung gestoppt ,
und/oder es wird vorzugsweise nach dem Stoppen der Trommel wenigstens einer der folgenden Schritte automatisch zeitversetzt durchgeführt wird:
- Stoppen des Antriebs einer Trommelfördereinrichtung
- Stoppen des Antriebs wenigstens einer Austragsfördereinrichtung.

Vorteilhaft bei diesen Ausgestaltungen ist, daß auch ungeübte Personen die Maschinen bedienen können. Bislang ist das bei bekannten Maschinen nicht immer der Fall, da für ungeübte Personen zu viele Einstellmöglichkeiten vorhanden sein können. Dadurch kann es passieren, daß die einzelnen Antriebe in einer ungeeigneten Reihenfolge gestartet werden und so Material ausgetragen wird, was anschließend unter Umständen mühsam per Hand wieder zurückbefördert werden muß.

Es wird deshalb ein Verfahren zur Steuerung von Siebmaschinen definiert, bei welchem nach einem Startsignal wenigstens zwei der folgenden Schritte automatisch zeitversetzt durchgeführt werden:
a) Starten des Antriebs wenigstens einer Austragsfördereinrichtung,
b) Starten des Antriebs einer Trommelfördereinrichtung,
c) Starten des Antriebs der Trommel,
d) Starten des Antriebs der Bunkerfördereinrichtung.

In einer Weiterbildung der zuvor beschriebenen Verfahren werden drei, vier oder alle angegebenen Komponenten automatisch zeitversetzt gestartet.

Dabei wird vor dem Starten des Antriebs der Trommel zunächst die Stelleinrichtung zum Spannen des Kettentriebes der Trommel betätigt.

Weiterhin ist es bevorzugt, daß nach einem Abschaltsignal wenigstens zwei der folgenden Schritte automatisch zeitversetzt durchgeführt werden:
a) Stoppen des Antriebs der Bunkerfördereinrichtung.
b) Stoppen des Antriebs der Trommel
c) Stoppen des Antriebs einer Trommelfördereinrichtung
d) Stoppen des Antriebs wenigstens einer Austragsfördereinrichtung

Vorzugsweise werden drei, vier oder alle angegebenen Verfahrensschritte nacheinander zeitversetzt durchgeführt.

Möglich ist, daß die Stelleinrichtung zum Spannen des Kettentriebes während des laufenden Siebbetriebes und nicht nur beim Start mit Druck beaufschlagt wird.

Es ist auch möglich, daß die Stelleinrichtung zum Spannen des Kettentriebes bei jedem Start mit einem vorbestimmten Druck beaufschlagt wird und bei dem anschließend abgesperrt wird.

In einer weiteren bevorzugten Ausgestaltungen der Erfindung können verschiedene der beschriebenen Ausgestaltungen und Weiterbildungen kombiniert werden.

Weitere Vorteile und Anwendungsmöglichkeiten der vorliegenden Erfindung ergeben sich aus dem folgenden Ausführungsbeispiel, das mit Bezug auf die Figuren erläutert wird.

In den Figuren zeigen:
- Fig. 1: eine erfindungsgemäße Siebmaschine in Transportstellung in einer perspektivischen Ansicht;
- Fig. 2: die Siebmaschine nach Fig. 1 in Arbeitsstellung in einer perspektivischen Ansicht;
- Fig. 3: eine große Siebtrommel in der Siebmaschine nach Fig. 1 in einer schematischen Vorderansicht;
- Fig. 4: eine vergrößerte Darstellung einer Lagerschwinge zur Lagerung der großen Siebtrommel nach Fig. 3;
- Fig. 5: einen Ausschnitt einer schematischen Vorderansicht einer kleineren Siebtrommel in der Siebmaschine nach Fig. 1;
- Fig. 6: eine stark schematische Ansicht der Siebtrommel im Gehäuse der Siebmaschine nach Fig. 1;
- Fig. 7: eine stark schematische Ansicht des Austragsförderbandes für Feinkorn der Siebmaschine nach Fig. 1;

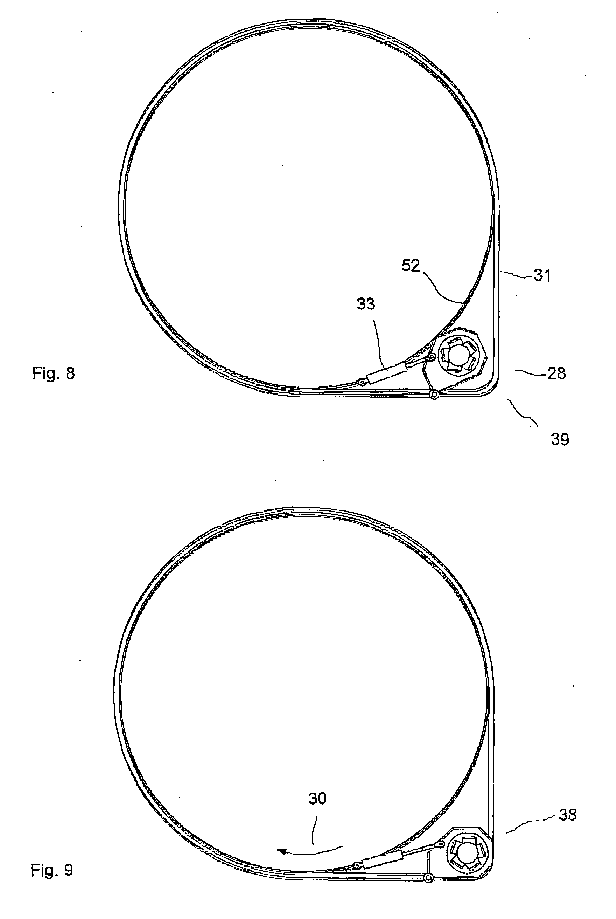

- Fig. 8: eine schematische Ansicht der Siebtrommel nach Fig. 1 mit dem Trommelantrieb in der Ruhestellung;
- Fig. 9: eine schematische Ansicht der Siebtrommel nach Fig. 1 mit dem Trommelantrieb in der Eingriffsstellung; und

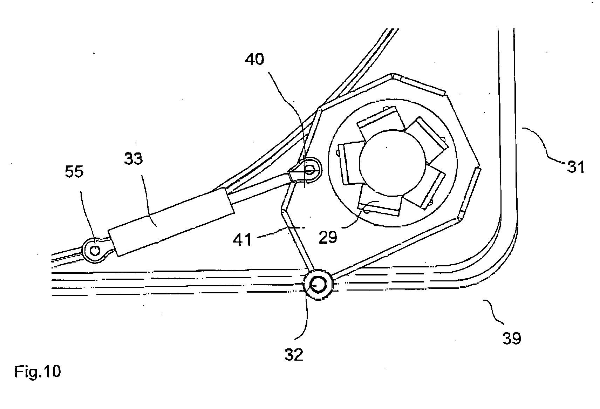

- Fig. 10: eine vergrößerte schematische Ansicht des in Fig. 8 dargestellten Trommelantriebs in der Ruhestellung.

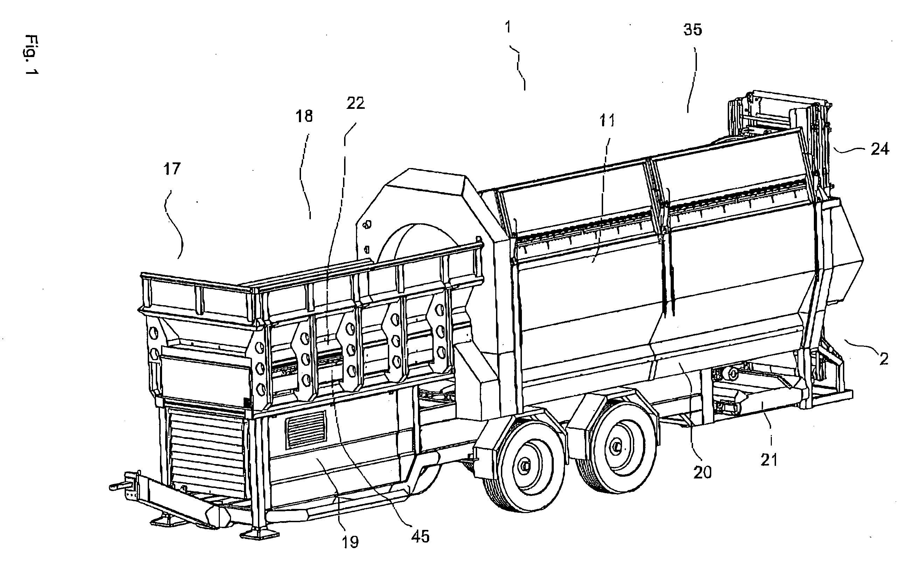

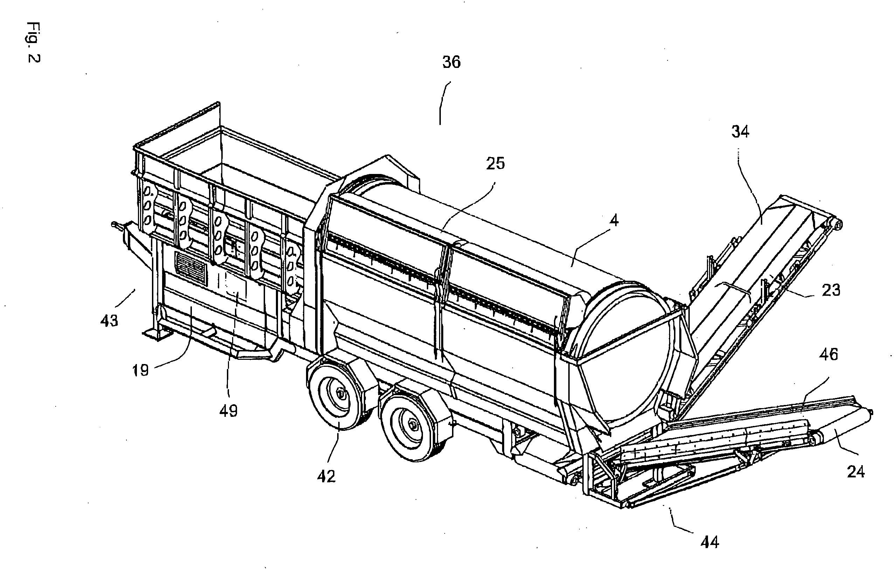

Das Ausführungsbeispiel wird nun unter Bezug auf die Figuren beschrieben. In Figur 1 ist eine mobile Siebmaschine 1 in der Transportstellung 35 und in Figur 2 in der ausgeklappten Arbeitsstellung 36 dargestellt.

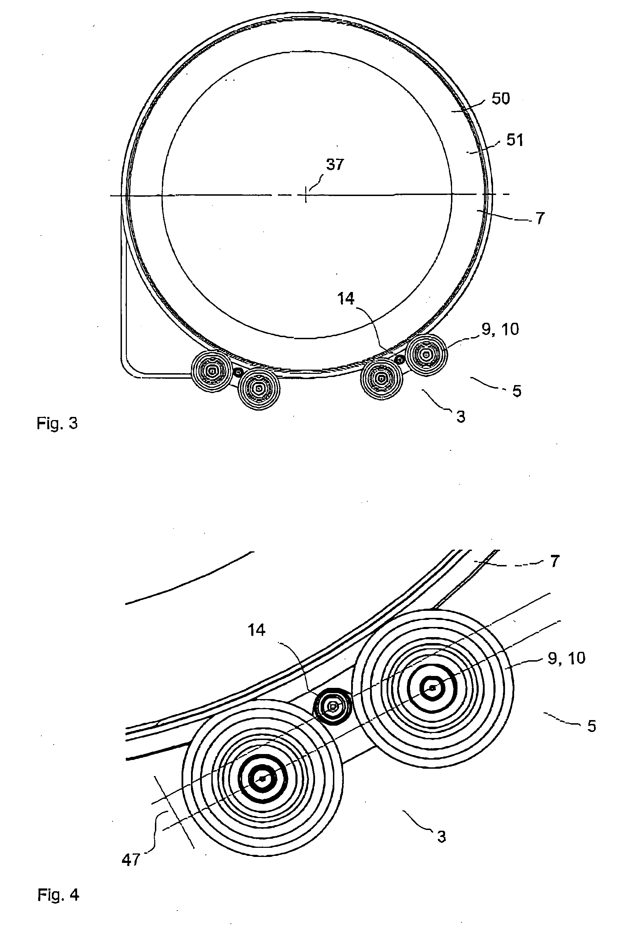

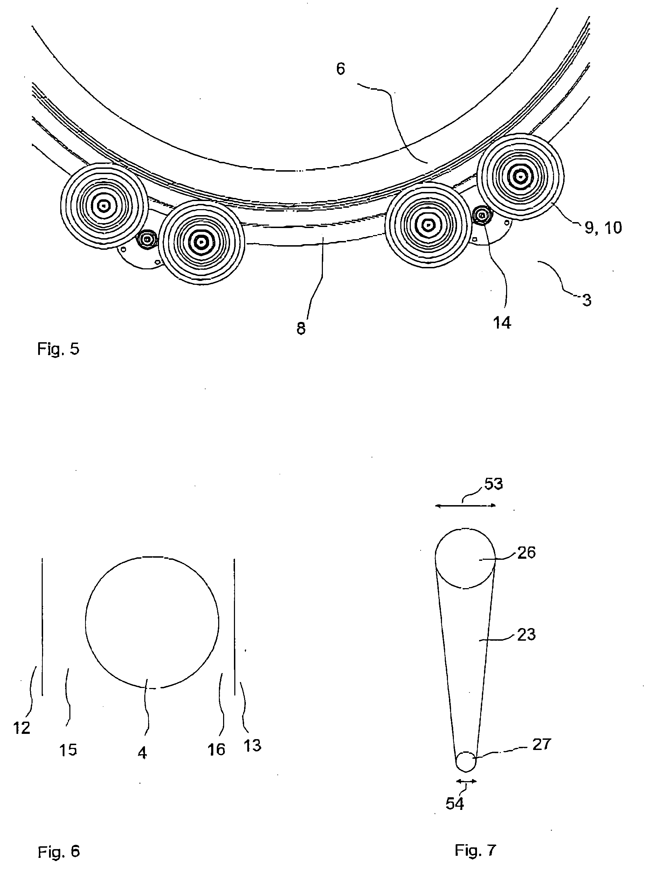

Die Trommelsiebmaschine 1 weist ein Gestell 2 mit Rädern 42 auf, an welchem die Trommel 4 drehbar gehalten wird. Durch Austausch der Trommel 4 können unterschiedliche Trommeln 7, 8, wie es in Figuren 3 und 5 dargestellt ist, mit unterschiedlich großen Durchmessern verwendet werden. Dabei ist das im Ausführungsbeispiel als Tragschwinge 3 ausgeführte Stützmittel in Figur 3 in der ersten Stellung 5 für große Trommeln und in Figur 5 in der zweiten Stellung 6 für kleinere Trommeln dargestellt.

An einem ersten Ende 43 der Trommelsiebmaschine 1 kann die insgesamt fahrbare, mobile, Trommelsiebmaschine 1 in der Transportstellung 35 an ein Fahrzeug angehängt werden.

An dem ersten Ende 43 befindet sich der Aufgabebunker 17, der den Bunkertrichter 18 und das Bunkerförderband 22 umfaßt. Die Beladung erfolgt z.B. mittels eines Radladers oder eines Baggers (jeweils nicht dargestellt) in den Aufgabebunker 17. Unterhalb des Aufgabebunkers ist die Antriebseinheit 19 der Siebmaschine 1.

Das Bunkerförderband 22 ist als Förderbandkassette ausgeführt, in der alle Antriebselemente wie Antriebswalze, Umlenkwalze, Fördergurt, Getriebe und Hydraulikmotor usw. integriert sind. Die Förderbandkassette wird in den Bunkertrichter 18 eingeschoben und fixiert. Das Bunkerförderband hat an der Unterseite Stollen 45, die in die Antriebswalze eingreifen, die ebenfalls verzahnt ist (nicht dargestellt).

Das Bunkerförderband 22 ragt bis in die Trommel 4 hinein und fördert das zu siebende Material zuverlässig in die Trommel 4 hinein. An der Materialaustrittsseite des Aufgabebunkers 17 ist an dem Bunkertrichter 18 ein Dichtring angebracht, der den Bunker 17 zur Siebtrommel 4 hin abdichtet. Die Toleranz beträgt im Ausführungsbeispiel ca. 10 mm. Je nach Anwendung können auch größere oder kleinere Toleranzen vorliegen.

Die Vorschubgeschwindigkeit des Bunkerförderbandes 22 kann in Abhängigkeit von der Siebgröße und des Siebmaterials mittels eines Steuereinrichtung 49 eingestellt werden. Die Steuereinrichtung kann ein oder mehrere Potentiometer umfassen .

Von dem ersten Ende 43 der Siebmaschine in Richtung des zweiten Endes 44 gesehen, schließt sich an den Aufgabebunker 17 die Siebtrommel 4 an.

Das aus dem Aufgabebunker 17 kommende Siebmaterial fällt in die Siebtrommel 4. Diese dreht sich im Betrieb mit einer Geschwindigkeit von ca. 10-23 Umdrehungen/min. Eine auf die Innenseite des Trommelmantels eingebrachte Förderschnecke 50 übernimmt den Materialtransport innerhalb der Siebtrommel. Die Förderschnecke ist im Ausführungsbeispiel eingeschweißt.

Insgesamt besteht die Siebtrommel 4 aus dem gelochten Trommelmantel, der Förderschnecke 50, den zwei Laufringen zum drehbaren Halten, einem Antriebsabschnitt, der mit einem Gummireibbelag ausgerüstet ist, einem Einlaufring 51 am Anfang der Trommel und gegebenenfalls einem oder mehreren Axialringen (nicht dargestellt) zur Stabilisierung und Sicherung der Trommel in Axialrichtung.

Durch die Drehung 30 der Trommel 4 wird das Siebmaterial mit hochgenommen und fällt ab einem bestimmten Punkt wieder herunter. Das Material in der Trommel 4 verhält sich gewissermaßen ähnlich zu einer sich überschlagenden Welle im Meer. Von hinten gesehen befindet sich das Material in einem Bereich von 2 Uhr bis 6 Uhr. Die Trommel bewegt sich in dieser Ansicht gegen den Uhrzeigersinn. Von vorne in Förderrichtung gesehen, also von dem ersten Ende 43 in Richtung auf das zweite Ende 44 hin gesehen, befindet sich das Material etwa in einem Winkelbereich zwischen 6 und 10 Uhr.

Wie in der schematischen Darstellung nach Figur 6 ersichtlich, liegt auf der Seite der Seitenwand 12 ein horizontaler Abstand 15 zwischen der Trommel 4 und der Seitenwand 12 vor. Auf der gegenüberliegenden Seite an der Seitenwand 13 liegt der minimale horizontale Abstand 16 vor. Hier im Ausführungsbeispiel ist der Abstand 16 deutlich kleiner als der Abstand 15. Der Abstand kann z.B. 80% oder 50% oder nur 33% des Abstands 15 betragen. Dadurch wird wertvoller Platz in der Breite gewonnen. Hier ist es so, daß der größere Abstand 15 auf der Seite vorliegt, auf der das Fördermaterial in der Trommel hochtransportiert wird.

Der feinere Anteil im Siebmaterial, das Feinkorn, fällt durch die Sieblochungen durch, während der Grobanteil, das Überkorn, in der Trommel verbleibt. Das Überkorn wird durch die Förderschnecken 50 zum Ende der Trommel hin und von dort dann hinaus befördert.

Im Ausführungsbeispiel hat die Siebtrommel einen Durchmesser von 2200 mm und eine Länge von 5500 mm. Der ungelochte Bereich hat jeweils vorne und hinten eine Länge von ca. 320 mm. In diesem ungelochten Bereich befinden sich die Laufrollen zur drehbaren Unterstützung der Siebtrommel und der Antriebsbereich mit dem Gummireibbelag.

Die Trommel ist auf vier Stützmitteln in Form von Lagerschwingen 3 gelagert. Jede Lagerschwinge 3 weist ein Radpaar mit Rädern 10 zur drehbaren Unterstützung der Siebtrommel 4 auf. Diese Radpaare sind an den Lagerschwingen 3 drehbar aufgenommen. Jede Lagerschwinge 3 ist an dem Gestell 2 oder dem Gehäuse 11 schwenkbar befestigt.

Es ist ebenso möglich, nur vier Tragräder 10 einzusetzen. Diese sind dann mit einem Flansch am Gestell 2 befestigt.

Der Antrieb der Trommel 4 geschieht mittels einer Rollenkette 31 an der sich an jedem vierten Glied zwei abgewinkelte Laschen (nicht dargestellt) befinden. Diese Laschen liegen auf dem Gummireibbelag 52 der Trommel 4 auf.

Ein Antriebskettenrad (nicht dargestellt) ist mit einem Motor verbunden. Im Ausführungsbeispiel ist der Motor als Hydraulikmotor 29 ausgeführt. Dieser Motor ist an einer drehbar gelagerten Motorkonsole bzw. an einem Flansch 41 befestigt. Der drehbar gelagerte Motorflansch bzw. Flansch 41 wird mittels einer Stelleinrichtung bewegt, die im Ausführungsbeispiel als Hydraulikzylinder 33 ausgeführt ist. Der Hydraulikzylinder 33 ist einerseits mit dem Drehpunkt 40 an dem Flansch 41 befestigt und andererseits an dem Gestell drehbar über einen Drehpunkt 55 befestigt. Durch die Drehbewegung der Motorkonsole bzw. des Flansches 41 wird die Kette 31 vorgespannt.

Ein Reinigungsbesen 25 ist in einem oberen Bereich vorgesehen. Dieser hat die Aufgabe, die Siebtrommel 4 von Anhaftungen durch Siebmaterial an den Löchern und Stegen der Siebtrommel zu befreien. Der Reinigungsbesen 25 besteht aus einer gelagerten Welle, auf der Rundbesenscheiben mit einem Kunststoffbesatz aufgezogen sind. Der Reinigungsbesen 25 insgesamt und dessen Reinigungsscheiben (die Rundbesen) haben keinen separaten Antrieb, sondern werden durch die Trommel mitgenommen und in Drehung versetzt.

Die Kunststoffborsten der Rundbesenscheiben stechen in die Sieblöcher ein und befreien sie so von Schmutz und Anhaftungen. Die Borsten und Besenscheiben verschleißen mit der Zeit. Um den Verschleiß auszugleichen und um auch bei teilweise verschlissenen Borsten ein ausreichendes Reinigungsergebnis zu erzielen, kann der Besen nachgestellt werden. In dem Ausführungsbeispiel geschieht das mit Hilfe von Hydraulikzylindern.

Das aus der Trommel ausgetragene Feinmaterial gelangt entweder direkt bzw. über Schurren auf das Trommelförderband 20. Dieses sitzt längs unter der Trommel und transportiert das Feinmaterial nach hinten. Dort wird das Material auf ein kurzes Querförderband 21 übergeben und gelangt dann auf das Austragsförderband 23 für Feinkorn, welches mit einer Neigung von ca. 30° zur Horizontalen angestellt ist. Anschließend wird das Feinmaterial frei auf Halde geschüttet. Das Austragsförderband 23 für Feinkorn wird zum Transport an die Siebmaschine angeklappt. Zusätzlich wird der obere Teil 34 des Förderbandes noch hydraulisch eingeknickt und legt sich über die Siebtrommel.

Bei dem dargestellten Ausführungsbeispiel umfaßt das Austragsförderband 23 für Feinkorn eine untere Transportwalze 27 und eine obere Transportwalze 26, die als Antriebswalze dient. Gemäß dieses Ausführungsbeispiels weist die Walze 27 einen deutlich kleineren Durchmesser 54 als die Antriebswalze 26 auf, die einen Durchmesser 53 hat.

Das Überkornmaterial fällt aus der Siebtrommel 4 auf ein längs angeordnetes Austragsförderband 24 für Überkorn. Das Förderband hat eine Neigung von ca. 25° zur Horizontalen. Das Material fällt am Ende des Bandes frei auf Halde. Dieses Band wird für den Transport ebenfalls angeklappt und der obere Teil 46 eingeknickt.

Der Primärantrieb der Siebmaschine erfolgt über einen Industriedieselmotor. Der Sekundärantrieb der einzelnen Komponenten erfolgt über an den Dieselmotor angebrachte Hydraulikpumpen. Je nach Ausführung kann der Dieselmotor eine unterschiedliche Leistung aufweisen, die hier bei 90 kW liegt.

Es ist möglich, Siebtrommeln verschiedener Trommelmanteldurchmesser und verschiedener Laufringdurchmesser einzusetzen.

Bei gegebenen Maßen des Bunkerförderbandes 22 bzw. der Bunkerförderkassette, stellt das gewisse Anforderungen an die positionierung der Siebtrommel dar, denn das Bunkerförderband 22 muß ja in die Siebtrommel eingeführt werden. Der freie Querschnitt der Siebtrommel in Höhe des Bunkerförderbandes 22 muß genügend groß zur Aufnahme desselben sein.

Das ist in der Regel gewährleistet, wenn die axiale Mittelachse der Trommeln innerhalb der Maschine gleich bleibt, unabhängig vom Durchmesser der Trommel 7, 8.

Ansonsten kann auch das seitliche Maß des Bunkerförderbandes 22 verkleinert werden, was aber mit Kapazitätseinbußen verbunden sein kann.

Im Ausführungsbeispiel wird durch Verschwenkung der Lagerschwingen 3 gewährleistet, daß die (virtuelle) axiale Mittelachse 37 von Trommeln mit unterschiedlichen Durchmessern gleich bleibt. Da die Drehpunkte der Räder 10 um den Abstand 47 gegenüber dem Verschwenkungspunkt 14 versetzt angeordnet sind, wird durch ein Verschwenken der Lagerschwingen 3 um 180° eine Trommel mit einem um den zweifachen Abstand 47 unterschiedlichen Radius paßgenau aufgenommen.

Jede Lagerschwinge 3 weist ein Laufradpaar auf. Die Räder 10 sind auf der drehbaren Lagerschwinge 3 befestigt und dort gelagert. Der Verschwenkungspunkt 14 der Lagerschwinge 3 und die Achsen der Laufräder 10 liegen nicht auf einer Linie sondern sind um den Abstand 47 versetzt angeordnet, der im Ausführungsbeispiel 50 mm beträgt.

In der ersten Position (siehe Figur 3), nämlich der Position der größeren Trommel befinden sich die Achsen der Laufräder unterhalb des Drehpunktes der Lagerschwinge 3. Soll nun eine kleinere Trommel eingesetzt werden, wird die Lagerschwinge 3 um 180° geschwenkt. Nun befinden sich die Achsen der Laufringe oberhalb des Verschwenkungspunktes 14 (siehe Figur 5). Durch den Versatz von zwei mal 50 mm ergibt sich eine Radiusveränderung von 100 mm und eine Durchmesserveränderung von 200 mm. Wenn die erste Position für einen Durchmesser von 2,2 m ausgebildet ist, dann ist die zweite Position zur Aufnahme einer Trommel von 2 m Durchmesser geeignet. Entsprechendes gilt für Trommeln mit 1,8 m und 2 m Durchmesser.

Durch Anpassung des Abstandes 47 an gewünschte Bedingungen (z.B. 1,5 m und 1,8 m Durchmesser) können für unterschiedliche Anwendungsfälle unterschiedliche Lagerschwingen 3 zur Verfügung gestellt werden.

Möglich ist auch eine Lagerschwinge, die drei Räder aufweist, die in einem Dreieck zueinander angeordnet sind. Der zentrale Verschwenkungspunkt 14 einer solchen Lagerschwinge 3 sollte dann von allen drei Achsen der Räder 10 einen unterschiedlichen Abstand aufweisen. Nun kann durch Verschwenkung um jeweils 120° die Siebmaschine auf die Aufnahme einer Siebtrommel mit einem von drei Durchmessern vorbereitet werden.

Der bereits beschriebene verschwenkbar gelagerte Trommelantrieb 28 wird mit einem Hydraulikzylinder 33 vorgespannt. Wird die Siebmaschine gestartet, erfolgt auf Knopfdruck ein automatisches, zeitversetztes Anfahren der einzelnen Komponenten.

Das ist sehr vorteilhaft, da insbesondere ungeübte Bedienpersonen die einzelnen Komponenten unter Umständen in einer ungeeigneten Reihenfolge an- oder abstellen. Wird z.B. das Bunkerförderband beim Abstellen der Maschine erst zuletzt ausgestellt, so kann es passieren, daß die Bedienperson das zwischenzeitlich von dem Bunkerförderband 22 in die Trommel 4 eingetragene Material wieder per Schaufel zurück befördern muß, was mit einem erheblichen Arbeits- und Zeitaufwand verbunden sein kann.

Zum Starten werden zunächst die beiden Austragsbänder für das Feinkorn und das Überkorn 23, 24 gestartet, daraufhin das Querförderband 21 und anschließend das Trommelförderband 20, dann der automatische Kettenspanner (der Hydraulikzylinder 33) des Siebtrommelantriebes 28, danach die Siebtrommel und schließlich das Bunkerförderband 22 des Aufgabebunkers 17.

Die Abschaltung erfolgt in umgekehrter Reihenfolge, unter anderem um den oben beschriebenen Nachteil zu vermeiden.

Die Vorspannung erfolgt im Ausführungsbeispiel so, daß der als Hydraulikzylinder 33 ausgeführte Spannzylinder mit einem bestimmten, vorgegebenen Druck beaufschlagt wird. Dadurch wird der Trommelantrieb 28 mit dem Antriebsmotor 29 von der Ruhestellung in die Eingriffsstellung gebracht und die Rollenkette 31 gespannt. Der Flansch 41 mit dem Antriebsmotor 29 wird dabei um den Schwenkpunkt 32 verschwenkt.

Im Neuzustand des Kettenantriebs erfolgt eine mittlere oder auch nur eine geringe Auslenkung des Hydraulikzylinders 33. Durch die Kraft des Hydraulikzylinders 33 bedingt, wird die Rollenkette 31 gespannt. Die Vorspannungskraft wird durch den Arbeitsdruck des Hydraulikzylinders 33 bedingt.

Hat nach z.B. etlichen Betriebstagen sich die Rollenkette 31 gelängt, so wird beim Starten doch jederzeit wieder die gewünschte Vorspannung eingestellt. Bei einer Längung der Rollenkette 31 fährt der Hydraulikzylinder 33 nur etwas weiter aus, bis die Gegenkraft der hydraulischen Kraft des Hydraulikzylinder 33 die Waage hält. Somit liegt hier ein sich selbst justierendes System vor. Das verringert den Wartungsbedarf enorm. Auch der Verschleiß wird gesenkt und die Lebensdauer erhöht. Eine zu geringe Vorspannung in der Rollenkette 31 kann zu einem Durchrutschen der Kette und einem erhöhten Verschleiss führen.

In einer Ausgestaltung wird nach Spannung des Hydraulikzylinders 33 und nachdem der Trommelantrieb 28 in die Eingriffsstellung gebracht wurde, anschließend der Druck mittels eines Wegeventils abgesperrt. Der Hydraulikzylinders 33 und somit der Trommelantrieb 28 verbleiben nun in der Eingriffsstellung 38, bis der Betrieb beendet wird. Während eines Betriebstages oder eines durchgehenden Betriebszeitraumes tritt eine Längung der Rollenkette 31 in der Regel nicht oder nur in vernachläs sigbar geringem Maße auf, so daß die Vorspannung in der Rollenkette 31 im wesentlichen erhalten bleibt. Sollte die Vorspannung dennoch nachlassen, kann durch ein Abstellen und erneutes Starten der Siebmaschine der Hydraulikzylinder 33 neu positioniert werden, so daß dann die angestrebte Vorspannung wieder anliegt.

Alternativ dazu kann der Druck im Hydraulikkreislauf kontinuierlich oder in vorgegebenen periodischen Abständen mit einem Sensor (nicht dargestellt) gemessen werden. Wenn dann der gemessene Druck ein bestimmtes Maß unterschreitet, wird in einer Ausführungsform der Druck im Hydraulikkreislauf wieder auf Nennniveau gebracht. Die zeitlichen Abstände der Messpunkte können auch vom gemessenen Druck abhängen. Möglich ist auch, daß die zeitlichen Abstände von der Belastung des Trommelantriebs abhängen und z.B. öfter gemessen wird, wenn eine hohe Belastung vorliegt.

In einer anderen bevorzugten Ausgestaltung wird die Vorspannkraft der Kette geregelt, indem der Druck im Hydraulikkreislauf auf einem gewünschtem Niveau gehalten wird. Der absolute Druck bzw. die Vorspannkraft kann insbesondere auch von der Belastung des Trommelantriebs abhängen und damit korrelieren.

In einer anderen Ausgestaltung verbleibt der Hydraulikzylinder 33 während des Betriebs unter Druck. Dann wird eine kontinuierliche Selbstspannung realisiert.

In allen Ausgestaltungen kann im Kreislauf des Hydraulikzylinders 33 eine Feder 48 angeordnet sein, die im Ausführungsbeispiel als hydraulische Feder in Form einer Stickstoffblase ausgeführt ist. Diese hydraulische Feder 48 kann die Unrundheiten der Trommel 4 bzw. des Kettenantriebs 28 ausgleichen.

Ein Vorteil einer derartigen hydraulischen Feder 48 liegt darin, daß die Rollenkette 31 immer die gleiche Vorspannung besitzt. Das trägt zu einer Erhöhung der Lebensdauer des gesamten Kettentriebes bei.

Wird die Siebmaschine 1 abgeschaltet, wird das wegeventil betätigt und schaltet um. Nun wird der Hydraulikkreis des Hydraulikzylinders 33 entsperrt, der Zylinder fährt in die Ruhestellung 39 und die Kette 31 wird entlastet. Im entlasteten Zustand kann die Kette 31 vom Kettenrad (nicht dargestellt) genommen werden. Dies ist z.B. notwendig um die Trommel 4 zu wechseln.

Eine zweite Möglichkeit besteht darin, den Hydraulikkreis des Hydraulikzylinders 33 mit dem Hydraulikkreis des Antriebsmotors 29 des Siebtrommelantriebs 28 zu verbinden. Sollte also der Druck im Antriebsmotors 29 steigen (z.B. durch schwereres Siebmaterial) wird der Druck des Hydraulikzylinders 33 ebenfalls erhöht und dadurch die Vorspannung der Antriebskette 31.

Dieser lastabhängige Regelkreis verhindert ein Durchrutschen der Antriebskette 31 auf der Trommel 4 auch bei schwersten Bedingungen.

Ein weiterer Vorteil des hydraulischen Spannens der Kette ist, daß man die Trommel kurzeitig z.B. für Wartungszwecke oder auch länger rückwärts laufen lassen kann.

## Patentansprüche

1. Siebmaschine (1),
mit einer Gestelleinrichtung (2) zum drehbaren Tragen einer Trommel (4), und
einer an der Gestelleinrichtung (2) angeordneten Antriebseinrichtung (28), welche mit einem Antriebsmittel (31) zusammenwirkt,
**dadurch gekennzeichnet,**
**daß** die Antriebseinrichtung (28) zwischen wenigstens einer Ruhestellung (39) und wenigstens einer Eingriffsstellung (38) bewegbar ist.

2. Siebmaschine (1) nach Anspruch 1, **dadurch gekennzeichnet, daß** das Antriebsmittel (31) wenigstens eine Rollenkette (31) und/oder wenigstens einen Zahnriemen und/oder wenigstens einen Keilriemen umfaßt.

3. Siebmaschine nach Anspruch 1 oder 2,
**dadurch gekennzeichnet, daß** wenigstens eine Stelleinrichtung (33) zum Bewegen der Antriebseinrichtung (28) aus der Ruhestellung (39) in die Eingriffsstellung (38) vorgesehen ist.

4. Siebmaschine (1) nach Ansprüchen 2 und 3,
**dadurch gekennzeichnet, daß** das Antriebsmittel (31) mit der Stelleinrichtung (33) als Spanneinrichtung mit einer, vorzugsweise einstellbaren, Spannkraft vorbelastbar ist.

5. Siebmaschine nach dem vorhergehenden Anspruch,
**dadurch gekennzeichnet, daß** in der Ruhestellung (39) das Antriebsmittel (31) im wesentlichen unbelastet ist und/oder daß in der Eingriffsstellung (38) das Antriebsmittel (31) mit einer vorbestimmten Spannkraft vorbelastet ist.

6. Siebmaschine nach mindestens einem der Ansprüche 3 bis 5, **dadurch gekennzeichnet, daß** die Stelleinrichtung (33) wenigstens einen Hydraulikzylinder (33) umfaßt.

7. Siebmaschine nach mindestens einem der vorhergehenden Ansprüche, **dadurch gekennzeichnet, daß** die Antriebseinrichtung (28) verschwenkbar ist.

8. Siebmaschine nach mindestens einem der vorhergehenden Ansprüche, **dadurch gekennzeichnet,**
**daß** eine Steuereinrichtung (49) vorgesehen ist, wobei vorzugsweise die Stelleinrichtung (33) mit der Steuereinrichtung (49) steuerbar ist und wobei die Steuereinrichtung (49) vorzugsweise derart strukturiert ist, daß die Stelleinrichtung (33) während des Betriebs mit der Steuereinrichtung (49) gesteuert wird.

9. Siebmaschine nach mindestens einem der Ansprüche 3 bis 8, **dadurch gekennzeichnet, daß** in einem Hydraulikkreislauf der Stelleinrichtung (33) wenigstens eine hydraulische Federeinrichtung vorgesehen ist.

10. Siebmaschine nach Anspruch 9, **dadurch gekennzeichnet, daß** der Hydraulikkreislauf der Antriebseinrichtung (28) in Verbindung mit dem Hydraulikkreislauf der Stelleinrichtung (33) steht.

11. Siebmaschine nach mindestens einem der vorhergehenden Ansprüche, **dadurch gekennzeichnet, daß** wenigstens einen Drucksensor vorgesehen ist.

12. Verfahren zur Steuerung einer Siebmaschine,
bei welchem nach einem Startsignal wenigstens die folgenden Schritte automatisch zeitversetzt durchgeführt werden:
a) zunächst Spannen des Kettentriebes der Trommel mittels der Stelleinrichtung (33);
b) Starten des Antriebs der Trommel.

13. Verfahren nach Anspruch 12,
bei welchem vor dem Starten des Antriebs der Trommel wenigstens einer der folgenden Schritte automatisch zeitversetzt durchgeführt wird:
- Starten des Antriebs wenigstens einer Austragsfördereinrichtung,
- Starten des Antriebs einer Trommelfördereinrichtung
und bei dem vorzugsweise nach dem Starten der Trommel wenigstens der folgende Schritt automatisch zeitversetzt durchgeführt wird:
- Starten des Antriebs der Bunkerfördereinrichtung.

14. Verfahren nach Anspruch 12 oder 13,
bei welchem nach einem Abschaltsignal vor dem Abschalten des Antriebs der Trommel wenigstens
- der Antrieb der Bunkerfördereinrichtung gestoppt wird,
und/oder bei dem vorzugsweise nach dem Stoppen der Trommel wenigstens einer der folgenden Schritte automatisch zeitversetzt durchgeführt wird:
- Stoppen des Antriebs einer Trommelfördereinrichtung
- Stoppen des Antriebs wenigstens einer Austragsfördereinrichtung.

15. Verfahren nach mindestens einem der Ansprüche 12 bis 14, **dadurch gekennzeichnet, daß** die Stelleinrichtung zum Spannen des Kettentriebes bei jedem Start mit einem vorbestimmten Druck beaufschlagt wird und bei dem anschließend vorzugsweise abgesperrt wird.
